(19) Europäisches Patentamt / European Patent Office / Office européen des brevets

(11) **EP 4 336 384 A1**

(12) **EUROPEAN PATENT APPLICATION**

(43) Date of publication:
**13.03.2024  Bulletin 2024/11**

(21) Application number: **23195857.0**

(22) Date of filing: **07.09.2023**

(51) International Patent Classification (IPC):
**G06F 17/18** $^{(2006.01)}$

(52) Cooperative Patent Classification (CPC):
**G06F 17/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.09.2022  GB 202213110**

(71) Applicant: **Airbus Defence and Space Limited
Stevenage, Hertfordshire SG1 2AS (GB)**

(72) Inventor: **DODGSON, Terence
Southampton (GB)**

(74) Representative: **Abel & Imray LLP
Westpoint Building
James Street West
Bath BA1 2DA (GB)**

(54) **STATISTICS CALCULATOR**

(57)    A method (200) of determining a statistical measure of a dataset, the method comprising, at a processor: receiving an initial sample of the dataset and initialising a counter value to zero (201); setting an initial value of the statistical measure based on the initial sample value (202); storing, in a memory, the initial value of the statistical measure (203); receiving further samples of the dataset sequentially (204), wherein for each successive sample received the method comprises: incrementing the counter value (205); determining an updated value of the statistical measure based on the previous, stored, value of the statistical measure, the current sample value, and the current counter value (206); updating the stored value of the statistical measure in the memory with the updated value of the statistical measure (207); and determining whether a reset condition is met (208), wherein in response to determining that the reset condition is met, reverting to step 201.

200

201 – receiving an initial sample of the dataset and initialising a counter value to zero.

202 - setting an initial value of the statistical measure based on the initial sample value.

203 - storing, in a memory, the initial value of the statistical measure.

204 - receiving further samples of the dataset sequentially.

205 – incrementing the counter value.

206 – determining an updated value of the statistical measure based on the previous, stored, value of the statistical measure, the current sample value, and the current counter value.

207 - updating the stored value of the statistical measure in the memory with the updated value of the statistical measure.

208 - determining whether a reset condition is met.

209 - in response to determining that the reset condition is met, reverting to step 201.

Fig. 2

EP 4 336 384 A1

**Description**

Technical Field

The present disclosure concerns methods of determining statistical measures of a dataset. More particularly, but not exclusively, this disclosure concerns measures, including methods, apparatus and computer programs, for use in determining statistical measures of a dataset.

Background

Methods are known for estimating the mean, standard deviation and variance of a dataset, such as a set of signal samples in a communications system.

Classical methods require the collection and storage of a large amount of data (large number of samples of the dataset) before any estimates of the mean, standard deviation and/or variance can be made. Furthermore, classical methods to calculate the variance require at least two passes over the whole dataset: one to calculate the mean of the dataset and a second to use this mean value when calculating the variance.

Other known techniques to track the mean of a set of samples involve the use of a sliding window or Finite Impulse Response (FIR) filter to calculate the mean of samples. These methods have the disadvantages of having to employ convolution (a relatively slow algorithm) and having to determine the "correct" window size. Typically, the window size depends on the size of the dataset and the periodicity of the samples in the dataset. This disadvantageously requires a preliminary analysis of the dataset to ensure the correct window size is used. If the chosen rolling average window size is too small, the estimated means may still be subject to large variations. On the other hand, if the window size is too large, the processing takes much longer and the dynamic fluctuation of the mean is supressed, which results in means that are not representative of dynamic conditions at particular times. In addition, although longer window averaging in general provides more accurate results, this carries the disadvantage of having to wait longer (i.e. until the window is fully populated) before an accurate value can be obtained.

Another method, known as Welford's method, allows statistical measures such as the mean, variance and standard deviation to be calculated iteratively, as each sample of the dataset is received. However, this method suffers from a number of drawbacks. For example, it can suffer from data overflow issues when calculating the variance and standard deviation. This is because known implementations of Welford's method require storing a certain, ever-increasing, running sum. Furthermore, Welford's method is limited to real values and has not been adapted to complex values (e.g. in-phase ($I$) and quadrature ($Q$) components of a signal).

With a rapid change in statistics (e.g. a step change in the mean and standard deviation) the classical method will fail, Welford's method will fail, and the windowing averaging method may take a long time to adapt to this change in statistics.

It is an object of the present disclosure to provide improved methods for estimating the mean, standard deviation and/or variance of a dataset, which do not suffer from the disadvantages set out above.

Summary

According to a first aspect, there is provided a method of determining a statistical measure of a dataset, the method comprising, at a processor:

(a) receiving an initial sample of the dataset and initialising a counter value to zero;
(b) setting an initial value of the statistical measure based on the initial sample value;
(c) storing, in a memory, the initial value of the statistical measure;
(d) receiving further samples of the dataset sequentially, wherein for each successive sample received the method comprises:
(e) incrementing the counter value;
(f) determining an updated value of the statistical measure based on the previous, stored, value of the statistical measure, the current sample value, and the current counter value;
(g) updating the stored value of the statistical measure in the memory with the updated value of the statistical measure; and
(h) determining whether a reset condition is met,

wherein in response to determining that the reset condition is met, reverting to step (a).
According to a second aspect, there is provided a computer program comprising a set of instructions, which, when executed by computerised apparatus, cause the computerised apparatus to perform a method of determining a statistical measure of a dataset, the method comprising:

(a) receiving an initial sample of the dataset and initialising a counter value to zero;
(b) setting an initial value of the statistical measure based on the initial sample value;
(c) storing, in a memory, the initial value of the statistical measure;
(d) receiving further samples of the dataset sequentially, wherein for each successive sample received the method comprises:
(e) incrementing the counter value;
(f) determining an updated value of the statistical measure based on the previous, stored, value of the statistical measure, the current sample value, and the current counter value;
(g) updating the stored value of the statistical measure in the memory with the updated value of the statistical measure; and
(h) determining whether a reset condition is met,

wherein in response to determining that the reset condition is met, reverting to step (a).

According to a third aspect, there is provided apparatus for determining a statistical measure of a dataset, the apparatus comprising a processor configured to:

(a) receive an initial sample of the dataset and initialising a counter value to zero;
(b) set an initial value of the statistical measure based on the initial sample value;
(c) store, in a memory, the initial value of the statistical measure;
(d) receive further samples of the dataset sequentially, wherein for each successive sample received the method comprises:
(e) increment the counter value;
(f) determine an updated value of the statistical measure based on the previous, stored, value of the statistical measure, the current sample value, and the current counter value;
(g) update the stored value of the statistical measure in the memory with the updated value of the statistical measure; and
(h) determine whether reset condition is met,

wherein in response to determining that the reset condition is met, the processor is configured to revert to step (a).

Description of the Drawings

Embodiments of the present disclosure will now be described by way of example only with reference to the accompanying schematic drawings of which:

Figure 1 shows a flowchart corresponding to a method of determining a statistical measure of a dataset according to embodiments of the disclosure;
Figure 2 shows a flowchart corresponding to a method of determining a statistical measure of a dataset according to embodiments of the disclosure;
Figure 3 shows an example hardware/firmware implementation for iteratively calculating the mean of real-valued samples according to embodiments of the disclosure;
Figure 4 shows an example hardware/firmware implementation for iteratively calculating the variance of real-valued samples according to embodiments of the disclosure;
Figure 5 shows an example hardware/firmware implementation for iteratively calculating the mean of complex-valued samples according to embodiments of the disclosure;
Figure 6 shows an example hardware/firmware implementation for iteratively calculating the variance of complex-valued samples according to embodiments of the disclosure;
Figure 7 shows an example plot of positive and negative envelope functions as a function of the sample number according to embodiments of the disclosure;
Figure 8 shows an example hardware/firmware implementation for calculating the real/complex mean and real/complex variance including convergence evaluation using envelope functions according to embodiments of the disclosure;
Figure 9 shows an example hardware/firmware implementation for determining values of a gradient function according to embodiments of the disclosure;
Figure 10 shows an example hardware/firmware implementation which implements the method of Figure 1 and the method of Figure 2 according to embodiments of the disclosure;

Figure 11 shows a comparison of estimating the mean of a dataset using a method according to the present disclosure and using a classical method;

Figure 12 shows a comparison of estimating the variance of a dataset using a method according to the present disclosure and using a classical method;

Figure 13 shows a comparison of estimating the mean (real component) of a dataset using a method according to the present disclosure, using a conventional windowing method, and using a classical method;

Figure 14 shows a corresponding comparison to that of Figure 13, but for the imaginary component of the mean;

Figures 15 and 16 correspond to Figures 13 and 14 respectively, but where the counter holding condition and the window size for the windowing method are greater; and

Figures 17 to 19 show the ability of methods according to the present disclosure to cope with abrupt changes in dataset statistics.

Detailed Description

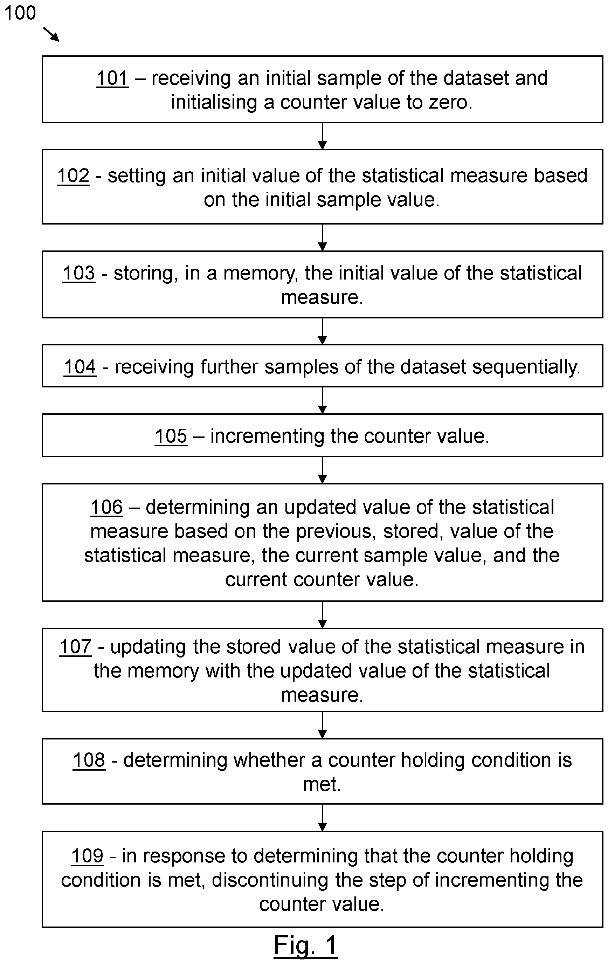

Figure 1 is a flowchart corresponding to a method 100 of determining a statistical measure of a dataset according to embodiments of the disclosure. The method will generally be executed on a processor. The statistical measure can be one or more of: the mean, the variance and the standard deviation. The dataset could be, for example, a set of signal samples received in a communications system. Alternatively, the dataset could be a set of training inputs to a machine learning algorithm.

The method begins at step 101 where an initial sample of the dataset is received by the processor and a counter value is initialised to zero. Then, at step 102, an initial value of the statistical measure (mean, variance and/or standard deviation) is set, based on the initial sample value. At step 103, the initial value of the statistical measure is stored in a memory. At step 104, further samples of the dataset are received by the processor sequentially, e.g. one by one. Each time a further sample is received, the method comprises applying steps 105 to 108 in sequence. At step 105, the counter value is incremented, i.e. increased by one. At step 106, an updated value of the statistical measure is determined based on the previous, stored, value of the statistical measure, the current sample value (i.e. the new sample just received), and the current counter value (i.e. the incremented counter value). At step 107, the stored value of the statistical measure in the memory is updated (i.e. overwritten) with the updated value of the statistical measure. At step 108, it is determined whether or not a counter holding condition is met, i.e. a condition according to which the counter value is frozen/held constant and is therefore no longer incremented as further new samples of the dataset are received. At step 109, in response to determining that the counter holding condition is met, the method proceeds but without the step 105 of incrementing the counter value. In this manner, the counter value is held constant and further updated values of the statistical measure are determined by repeating steps 106 and 107 for each successive dataset sample received, where the "current counter value" is the "constant counter value".

This method 100 obtains values of the statistical measure iteratively, on a sample-by-sample basis and without needing to store a history of the whole dataset. The method 100 therefore uses much less memory than known techniques. There is also no requirement for costly memory access to large numbers of stored data (speeding up the process). No pre-analysis of the dataset is required, unlike the windowing method which requires an appropriate choice of window size to be determined. Furthermore, the method 100 does not employ a slow convolution process, unlike the windowing method. The method 100 accurately calculates the mean and variance (or standard deviation), which exactly agree with values obtained through classical methods during the early stages of the calculation (up until the counter holding condition is met). The method 100 is compatible with either real or complex dataset sample values.

By freezing or holding the counter value constant, data overflow issues are avoided, which means that the method can continue to provide updated estimates of the statistical measure without running into instabilities, or indeed crashing completely. Once the counter is frozen, the ongoing estimates of the statistical measure will deviate slightly from the true, classical value. However, this deviation is minimal, as demonstrated later in the present disclosure. In fact, the accuracy still remains greater than that obtained using a typical window averaging method (where accuracy is impacted by the relatively short window length)

In embodiments, the counter holding condition is met when a counter upper limit is reached. For example, the counter holding condition might be reached when the incrementing counter value $i$ reaches a pre-selected maximum counter value, such as $i=1000$, $i=10\,000$ or $i=100\,000$, for example. The choice of counter upper limit may not necessarily be an arbitrary number, but may be based on considerations of counter overflow and/or counter underflow values. Overflow and underflow conditions arise when the precision limit supported by the processor is reached, such that numerical functions dependent on the counter value would no longer be accurate.

In other embodiments, the counter holding condition is met when a convergence condition is satisfied. In such embodiments, the standard deviation, or the variance, of the dataset is monitored as each sample of the dataset is received. A difference function is evaluated, based on the difference between the standard deviation, or the variance, on a sample-by-sample basis. This difference function will tend to converge towards zero as the number of samples received increases. Accordingly, this allows a threshold difference function value to be set, below which it is determined that the convergence condition is satisfied and the counter can be frozen. Specific details of one such difference function, according to an embodiment, are provided below.

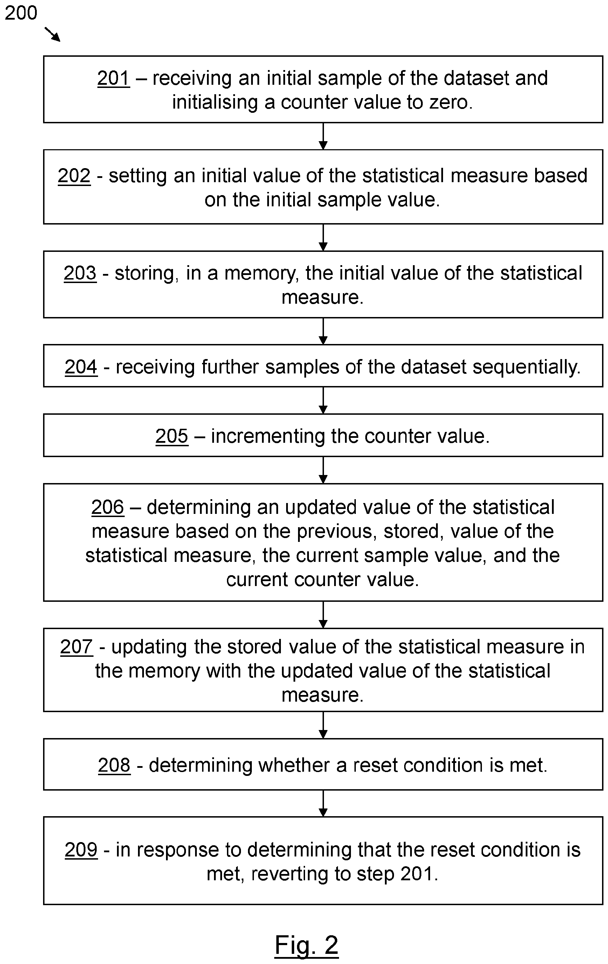

Figure 2 is a flowchart corresponding to a further method 200 of determining a statistical measure of a dataset according to embodiments of the disclosure. The method will generally be executed on a processor. The statistical measure can be one or more of: the mean, the variance and the standard deviation. The dataset could be, for example, a set of signal samples received in a communications system. Alternatively, the dataset could be a set of training inputs to a machine learning algorithm.

The method begins at step 201 where an initial sample of the dataset is received by the processor and a counter value is initialised to zero. Then, at step 202, an initial value of the statistical measure (mean, variance and/or standard deviation) is set, based on the initial sample value. At step 203, the initial value of the statistical measure is stored in a memory. At step 204, further samples of the dataset are received by the processor sequentially, e.g. one by one. Each time a further sample is received, the method comprises applying steps 205 to 208 in sequence. At step 205, the counter value is incremented, i.e. increased by one. At step 206, an updated value of the statistical measure is determined based on the previous, stored, value of the statistical measure, the current sample value (i.e. the new sample just received), and the current counter value (i.e. the incremented counter value). At step 207, the stored value of the statistical measure in the memory is updated (i.e. overwritten) with the updated value of the statistical measure. At step 208, it is determined whether or not a counter reset condition is met, i.e. a condition according to which the process should be reset back to an initial counter value of zero and the previous estimates of the statistical measure should be reset. At step 209, in response to determining that the counter reset condition is met, the method reverts to the initial step 201, where the next received sample of the dataset is treated as the initial sample.

This method 200 also, like the method 100 of Figure 1, obtains values of the statistical measure iteratively, on a sample-by-sample basis and without needing to store a history of the whole dataset. The method 200 therefore uses much less memory than known techniques. There is also no requirement for costly memory access to large numbers of stored data (speeding up the process). No pre-analysis of the dataset is required, unlike the windowing method which requires an appropriate choice of window size to be determined. Furthermore, the method 200 does not employ a slow convolution process, unlike the windowing method. The method 200 accurately calculates the mean and variance (standard deviation), which exactly agree with values obtained through classical methods. The method 200 is compatible with either real or complex dataset sample values.

This method 200 can detect/track sudden changes in the sample statistics, such as a step-like change in the sample mean, for example. This allows ongoing estimates of the mean and/or variance to recover rapidly from such a statistics change and continue to be accurate. This is in contrast to known windowing methods, which can require much more time to recover from sudden changes in the underlying sample statistics, depending on the window size chosen.

In embodiments, for each successive sample received, an updated value of a gradient function is determined. The gradient function varies in response to changes in the statistics of the dataset, e.g. whether the mean of the samples is suddenly increasing or decreasing, or whether it is remaining approximately constant. In response to the value of the gradient function exceeding a pre-determined threshold value, the reset condition is considered to be met and the process is reset.

In embodiments, the value of the gradient function is derived by comparing successive estimates of the mean of the dataset samples. In this manner, it is possible to detect a sudden upwards or downwards trend in the mean of the incoming samples, which is indicative of a sudden change in the underlying sample statistics. This can be carried out by determining an updated value of the mean of the dataset as each new sample is received. Then, by comparing the updated value of the mean to the previous value of the mean it is possible to determine an updated value of the gradient function based on the comparison between the updated value of the mean and the previous value of the mean.

One option is to determine whether the updated value of the mean is greater than, the same as, or less than the previous value of the mean. Then, an output value can be provided which is indicative of whether the updated value of the mean is greater than, the same as, or less than the previous value of the mean. In embodiments, the output value is positive (e.g. +1) when the updated value of the mean is greater than the previous value of the mean; the output value is equal to 0 when the updated value of the mean is the same as the previous value of the mean; and the output value is negative (e.g. -1) when the updated value of the mean is less than the previous value of the mean.

In one embodiment, the value of the gradient function is derived by determining the mean of all calculated output values. In this manner, if the output values are predominately +1 for successive signal samples received after a certain point in time, the value of the gradient function will start to increase. If the output values are predominately -1 for successive signal samples received after a certain point in time, the value of the gradient function will start to decrease. It can be desirable to derive an always-positive value for the gradient function. This can be done by squaring the updated mean of the output values, for example.

In situations where the dataset comprises complex values, deriving the value of the gradient function can be done by comparing successive estimates of the mean of the dataset samples for the real and imaginary components of the samples separately. These outputs can then be combined to obtain a single, always-positive value of the gradient function.

The methods disclosed herein can be used with datasets having real-valued samples and datasets having complex-valued samples and can be used to calculate either the mean and/or the variance (and by association the standard deviation) of the dataset on a sample-by-sample basis.

For real-valued samples, where the statistical measure to be evaluated is the mean, the initial value of the mean, used in steps 102 and 202 is equal to the initial sample value. Thereafter, determining the updated value of the mean in steps 106 and 206 involves evaluating the expression:

$$\alpha_i = \left(\frac{i}{i+1}\right)\alpha_{i-1} + \frac{x_i}{i+1}$$

wherein, $\alpha_i$ is the updated value of the mean, $i$ is the current counter value, $x_i$ is the current sample value and $\alpha_{i-1}$ is the previous value of the mean, wherein $\alpha_{-1}=0$. It should be noted that this expression requires only the previous mean $\alpha_{i-1}$ to be stored and used with the current sample $x_i$. The first mean estimate will be equal to the first sample, the next will be equal to the average of the first and second samples and so on, in an iterative manner, as further samples of the dataset are received.

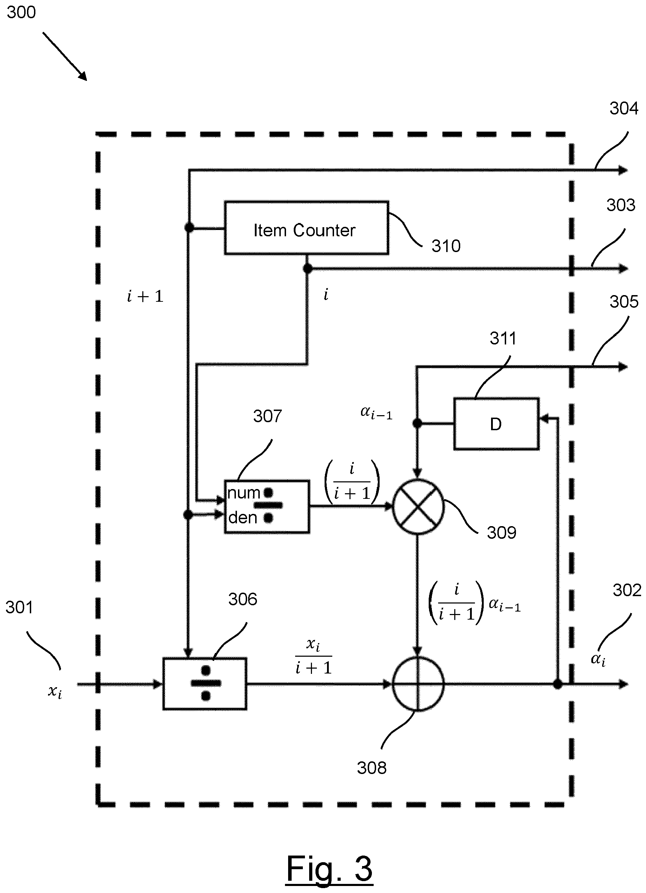

Figure 3 shows an example hardware/firmware implementation 300 for iteratively calculating the mean of real-valued samples according to embodiments of the disclosure. The main input 301 receives the input samples $x_i$. The output 302 provides the updated value of the mean $\alpha_i$. Three further outputs 303, 304, 305, are shown in Figure 3. These are: the current counter value (i) 303; the next counter value (i + 1) 304, and the previous mean estimate ($\alpha_{i-1}$) 305. These additional outputs are used if it is desired to calculate the variance or standard deviation, as is expanded upon below. Internally a number of processing blocks are employed to implement evaluation of the real-valued mean. These include division blocks 306, 307; a summation block 308; a multiplication block 309; the counter itself 310; and a delay block 311.

For calculation of the variance, with real-valued datasets, the initial value of the variance, used in steps 102 and 202, is equal to zero. Then, determining the updated value of the variance, in steps 106 and 206, involves evaluating the expression:

$$v_i = \left(\frac{i}{i+1}\right)v_{i-1} + \frac{(x_i - \alpha_i).(x_i - \alpha_{i-1})}{(i+1)}$$

wherein $v_i$ is the updated value of the variance and $v_{-1} = 0$. It should be noted that this expression requires only the previous variance $v_{i-1}$ and the previous mean $\alpha_{i-1}$ to be stored and used with the current sample $x_i$ and the current mean $\alpha_i$.

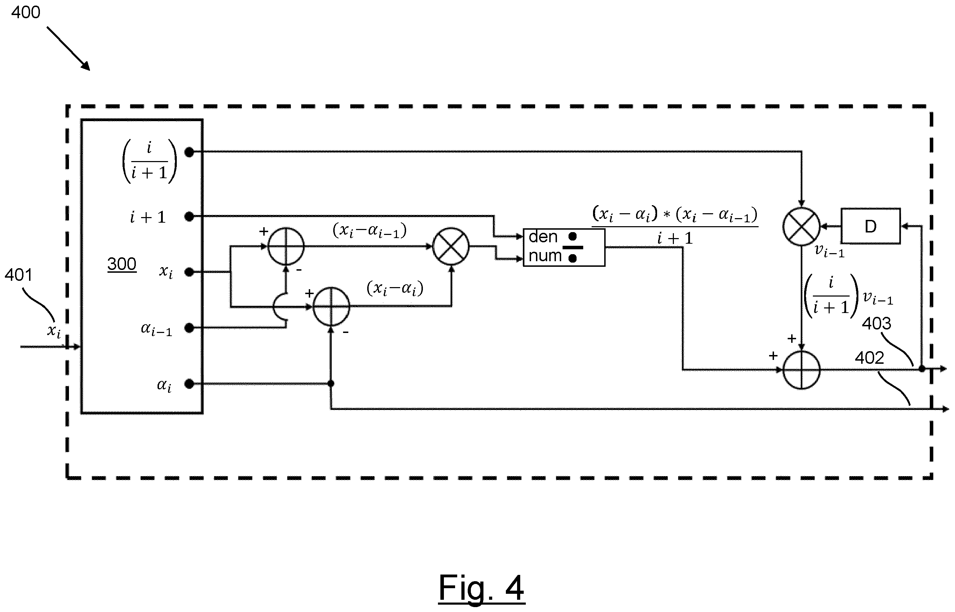

Figure 4 shows an example hardware/firmware implementation 400 for iteratively calculating the variance of real-valued samples according to embodiments of the disclosure. The main input 401 receives the input samples $x_i$. The implementation 300 of Figure 3 is used internally to calculate the mean. The outputs 402 and 403 are the current variance $v_i$ and the current mean $\alpha_i$ respectively. The internal blocks used are defined with respect to the description of Figure 3.

For complex-valued samples and where the statistical measure to be evaluated is the complex mean, the initial value of the complex mean, used in steps 102 and 202 is equal to the initial complex sample value. Thereafter, determining the updated value of the complex mean in steps 106 and 206 involves evaluating the expressions:

$$\alpha_i = \left(\frac{i}{i+1}\right)\alpha_{i-1} + \frac{x_i}{i+1},$$

$$\beta_i = \left(\frac{i}{i+1}\right)\beta_{i-1} + \frac{y_i}{i+1},$$

wherein $\mu_i = \alpha_i + j.\beta_i$ is the updated value of the complex mean, $i$ is the current counter value, $z_i = x_i + j.y_i$ is the current sample value and $\alpha_{i-1}$ and $\beta_{i-1}$ are the real and imaginary parts of the previous value of the complex mean, wherein $\alpha_{-1}=0$ and $\beta_{-1} = 0$.

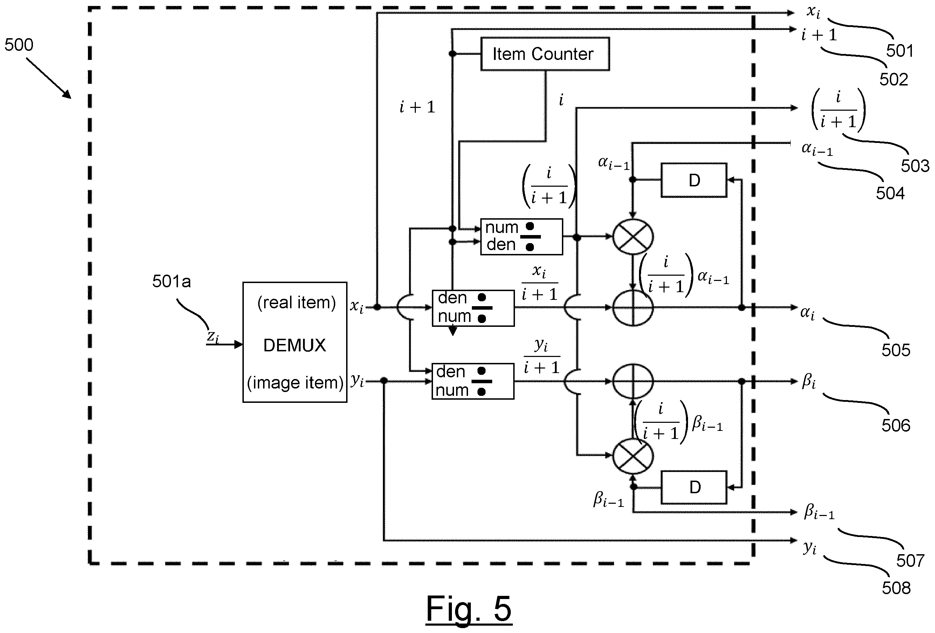

Figure 5 shows an example hardware/firmware implementation 500 for iteratively calculating the mean of complex-valued samples according to embodiments of the disclosure. The main input 501a receives the current complex-valued input sample $z_i$. A number of outputs 501-508 are provided. These are: the current sample real-component 501;

the next counter value 502; the current counter value divided by the next counter value 503; the previous real-component of the mean 504; the current real-component of the mean 505; the current imaginary component of the mean 506; the previous imaginary component of the mean 507; and the current sample imaginary component 508. Outputs 505 and 506 correspond to the expressions above, the other (optional) outputs are utilised for calculating the variance of complex datasets, as explained below. The internal blocks used are defined with respect to the description of Figure 3.

For calculation of the variance, with complex-valued datasets, the initial value of the variance, used in steps 102 and 202 is equal to zero. Then, determining the updated value of the variance, in steps 106 and 206, involves evaluating the expression:

$$ v_i = \left(\frac{i}{i+1}\right) v_{i-1} + \frac{(x_i - \alpha_i).(x_i - \alpha_{i-1})}{(i+1)} + \frac{(y_i - \beta_i).(y_i - \beta_{i-1})}{(i+1)} $$

wherein $v_i$ is the updated value of the variance and $v_{-1} = 0$.

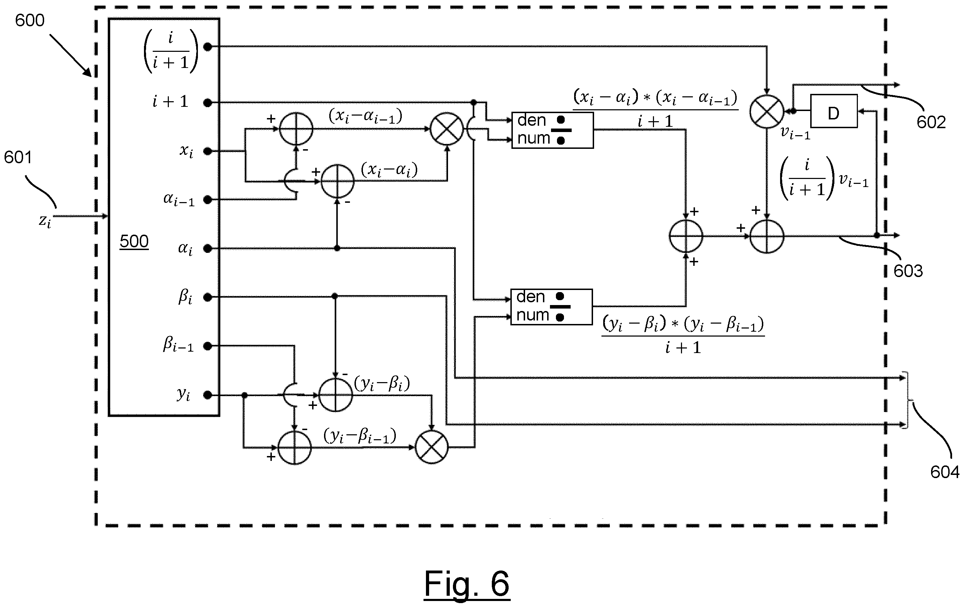

Figure 6 shows an example hardware/firmware implementation 600 for iteratively calculating the variance of complex-valued samples according to embodiments of the disclosure. The main input 601 receives complex-valued input samples $z_i$. The implementation 500 of Figure 5 is used internally to calculate the complex mean. Three outputs 602-604 are provided. These are: the previous variance estimate ($v_{i-1}$) 602, the current variance estimate ($v_i$) 603, and the current complex mean estimate ($\mu_i = \alpha_i + j. \beta_i$) 604. The purposes of outputs 602 and 604 will become apparent from the discussion below. The internal blocks used are defined with respect to the description of Figure 3.

As discussed above, in embodiments of the method 100 of Figure 1, the counter holding condition is met when a convergence condition is satisfied. In such embodiments, the standard deviation $\sigma_i$ (which is the square root of the variance), or the variance $v_i$, of the dataset is monitored as each sample of the dataset is received. A difference function is evaluated, based on the difference $\sigma_i - \sigma_{i-1}$ between the standard deviation (or the variance) on a sample-by-sample basis. An updated value of a difference function $d_p$ is determined based on the difference between the updated value of the standard deviation, or the variance, and the previous value of the standard deviation, or the variance. In response to determining that the value of the difference function is less than a pre-determined threshold value, it is determined that the convergence condition is satisfied and accordingly the counter is then held constant.

In embodiments, the difference function $d_p$ is given by the magnitude of the difference between a positive envelope function $E_i^p$ and a negative envelope function $E_i^n$, such that:

$$ d_p = \left| E_i^p - E_i^n \right| $$

wherein $E_i^p$ and $E_i^n$ are the positive and negative envelope functions respectively and are given by the expressions:

$$ E_i^p = \left(\frac{i}{i+1}\right) E_{i-1}^p + \frac{e_i^p}{i+1} $$

$$ E_i^n = \left(\frac{i}{i+1}\right) E_{i-1}^n + \frac{e_i^n}{i+1} $$

wherein:

$$ e_i^p = (\sigma_i - \sigma_{i-1}), $$

$$ e_i^n = 0 \quad \text{, when} (\sigma_i - \sigma_{i-1}) \geq 0 $$

$$ e_i^n = (\sigma_i - \sigma_{i-1}), $$

$$e_i^p = 0$$
, when$(\sigma_i - \sigma_{i-1}) < 0$

Accordingly, it should be appreciated that the positive envelope function is equal to the mean of the differences between the updated values of the standard deviation, or the variance, and the previous values of the standard deviation, when said differences are positive. Likewise, the negative envelope function is equal to the mean of the differences between the updated values of the standard deviation, or the variance, and the previous values of the standard deviation, when said differences are negative.

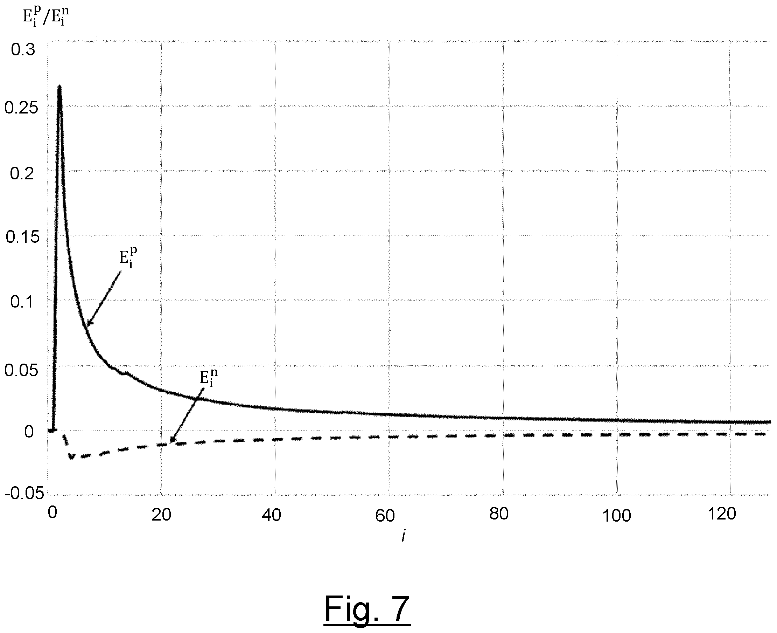

Figure 7 shows an example plot of the positive and negative envelope functions as a function of the sample value $i$ according to embodiments of the disclosure. Convergence of the two envelope curves is evident. A threshold value for the difference function could be said to be reached by a counter value of about 80-100, for example, at which point the counter value would be frozen/held constant.

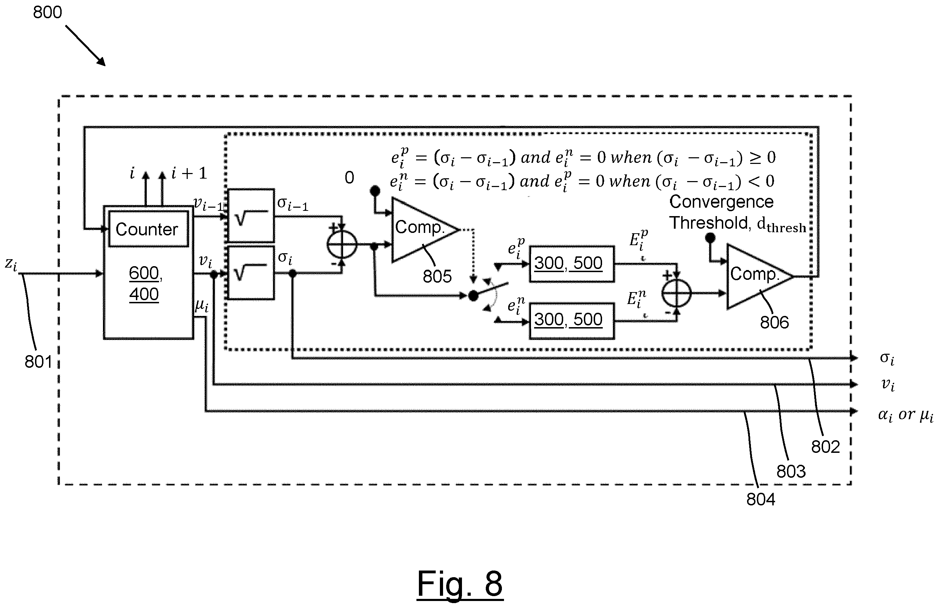

Figure 8 shows an example hardware/firmware implementation 800 for calculating the real/complex mean and real/complex variance including the convergence evaluation using envelope functions as set out above according to embodiments of the disclosure. The implementation uses either the implementation 300 of Figure 3 or the implementation 500 of Figure 5 for calculating the means used to evaluate the positive and negative envelope functions. In addition, the implementation uses either the implementation 400 of Figure 4 or the implementation 600 of Figure 6 for evaluating the variance and mean. The input 801 receives the real or complex sample values. The outputs are: the standard deviation 802, the variance 803, and the real or complex mean 804. Comparator 805 is used to determine whether $\sigma_i - \sigma_{i-1}$, is less than zero or greater than/equal to zero. Comparator 806 is used to determine whether the value of the difference function $d_p$ is greater than or less than the threshold value $d_{thresh}$.

As discussed above, in embodiments of the method 200 of Figure 2, for each successive sample received, an updated value of a gradient function is determined. The gradient function varies in response to changes in the statistics of the dataset, e.g. whether the mean of the samples is suddenly increasing or decreasing, or whether it is remaining approximately constant. In response to the value of the gradient function exceeding a pre-determined threshold value, the reset condition is considered to be met and the process is reset.

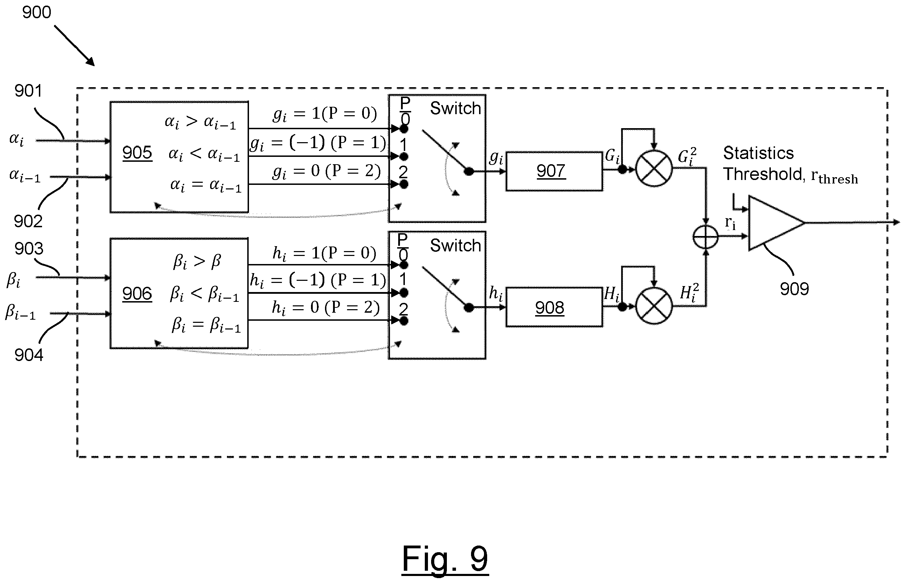

Figure 9 shows an example hardware/firmware implementation for determining values of a gradient function according to embodiments of the disclosure. This can be used to implement part of the method 200 of Figure 2, where a reset condition is determined based on the value of the gradient function. For the case of complex-valued dataset samples, there are four inputs 901-904. These are: the current real component of the complex mean 901; the previous real component of the complex mean 902; the current imaginary component of the complex mean 903; and the previous imaginary component of the complex mean 904.

A first comparator stage 905 compares the current real component of the complex mean with the previous real component of the complex mean. The first comparator 905 output $g_i$ = +1 if the current real component of the complex mean is greater than the previous real component of the complex mean. The first comparator 905 output $g_i$ = 0 if the current real component of the complex mean is equal to the previous real component of the complex mean. The first comparator 905 output $g_i$ = -1 if the current real component of the complex mean is less than the previous real component of the complex mean.

A second comparator stage 906 compares the current imaginary component of the complex mean with the previous imaginary component of the complex mean. The second comparator 906 output $h_i$ = +1 if the current imaginary component of the complex mean is greater than the previous imaginary component of the complex mean. The second comparator 906 output $h_i$ = 0 if the current imaginary component of the complex mean is equal to the previous imaginary component of the complex mean. The second comparator 906 output $h_i$ = -1 if the current imaginary component of the complex mean is less than the previous imaginary component of the complex mean.

The comparator stage 905, 906 outputs $g_i$ and $h_i$ are averaged on a sample-by-sample basis in statistics modules 907 and 908 respectively to obtain running means of the comparator outputs denoted $G_i$ and $H_i$ respectively. These statistics modules are, in an embodiment, the same as that of Figure 3. The outputs of the statistics modules are squared and added together to provide an always-positive value of the gradient function: $$r_i = G_i^2 + H_i^2$$ . A final comparator 909 then determines if the value of the gradient function $r_i$ is greater than a threshold value $r_{ithresh}$.

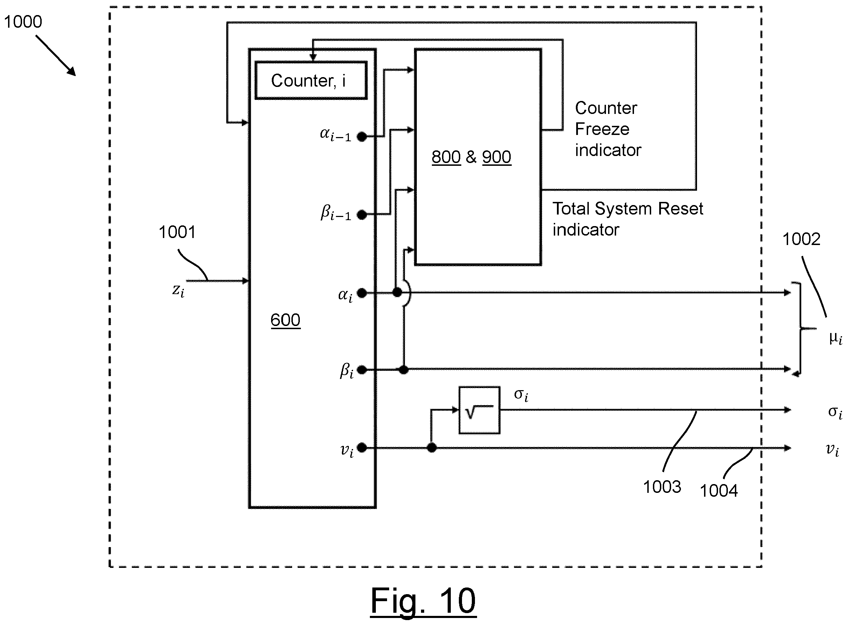

Figure 10 shows an example hardware/firmware implementation 1000 which combines an implementation of the method 100 of Figure 1 with an implementation of the method 200 of Figure 2 according to embodiments of the disclosure. The main input 1001 receives samples of a dataset. Internally, a first block 600 is as per the implementation of Figure 6, and calculates the complex mean and variance. Additional blocks 800 and 900 are based on the implementations of Figures 8 and 9, and generate the counter freeze/stop signal and perform the gradient detection producing a reset signal. Three outputs 1002-1004 are provided. These are: the complex mean 1002, the standard deviation 1003 and the variance 1004.

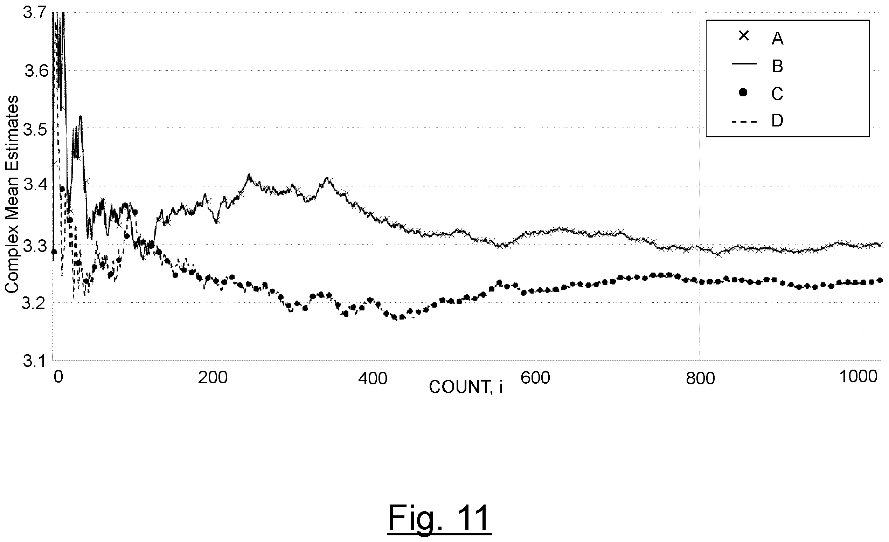

Figure 11 shows a comparison of estimating the mean of a dataset using a method according to the present disclosure and using a classical method. The classical method involves directly calculating the mean of the samples using a standard formula for the mean, and therefore requires storing all previous sample values. The plots are shown before the counter holding condition is met. Plot "A" is the real component of the mean obtained using a method according to the present disclosure; plot "B" is the real component of the mean obtained using a classical method; plot "C" is the imaginary component of the mean obtained using a method according to the present disclosure; and plot "D" is the imaginary component of the mean obtained using a classical method. The results obtained using a method according to the present disclosure are identical to the results obtained when using a classical method, when the counter holding condition has not yet been met.

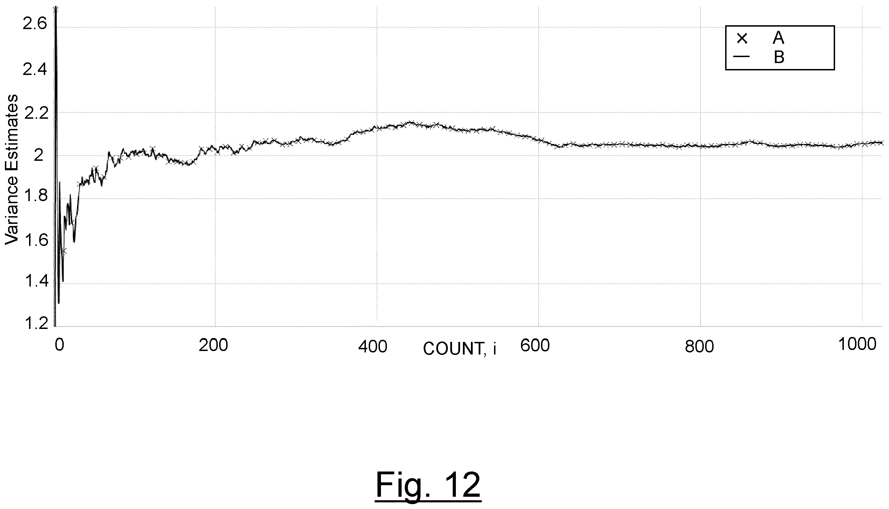

Figure 12 shows a comparison of estimating the variance of a dataset using a method according to the present disclosure and using a classical method. The classical method involves directly calculating the variance of the samples using a standard formula for the variance, and therefore requires storing all previous sample values and parsing of the data twice, as explained before. The plots are shown before the counter holding condition is met. Plot "A" is the variance obtained using a method according to the present disclosure; and plot "B" is the variance obtained using a classical method. The results obtained using a method according to the present disclosure are identical to the results obtained when using a classical method, when the counter holding condition has not yet been met.

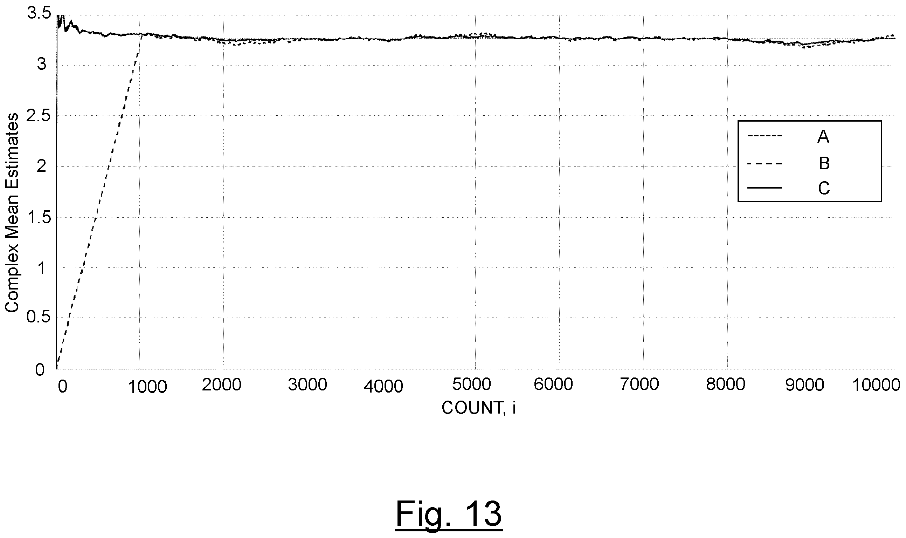

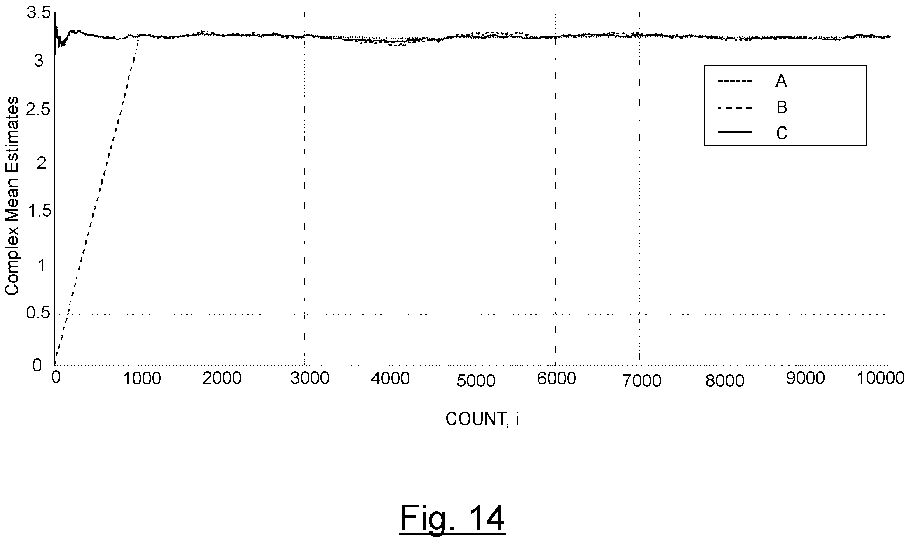

Figure 13 shows a comparison of estimating the mean (real component) of a dataset using a method according to the present disclosure (plot "C"), using a conventional windowing method (plot "B"), and using a classical method (plot "A"). The counter holding condition occurs at $i$=1024, i.e. beyond $i$=1024 the counter value is held constant. The window size for the windowing method is set to 1024. Before the counter holding condition is met, the method according to the present disclosure and the classical method give identical results, whereas the conventional windowing shows a mean estimate that starts to ramp up to a comparable value as more of the window is occupied with estimates (this indicates a drawback of windowing during start up). After a count of 1024 the counter is frozen and hence values are no longer identical to the classical estimations for the method according to the present disclosure; however, the plots are seen to be closer to the classical method than the windowing method is. It should also be noted that the counter does not have to be frozen at a value of 1024 - this was only done for comparison purposes. Figure 14 shows a corresponding comparison but for the imaginary component of the mean.

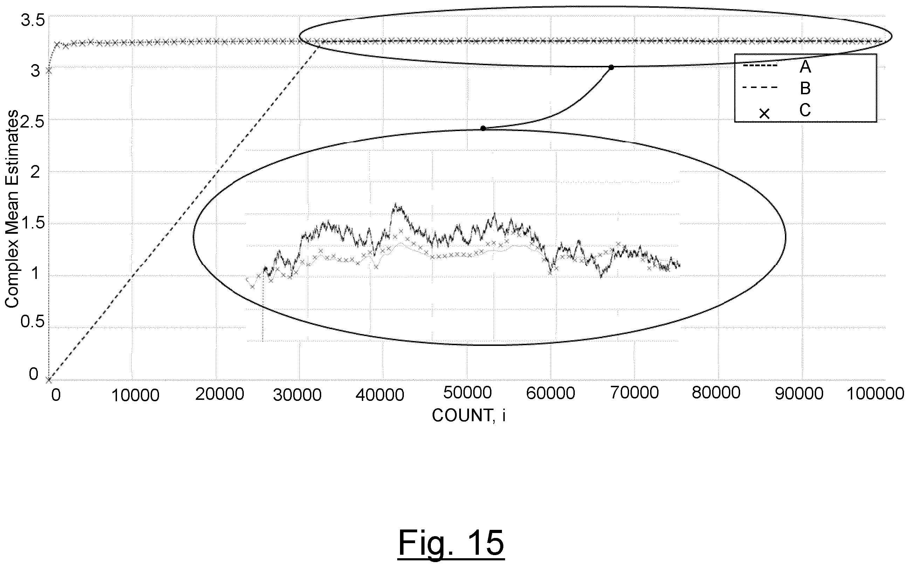

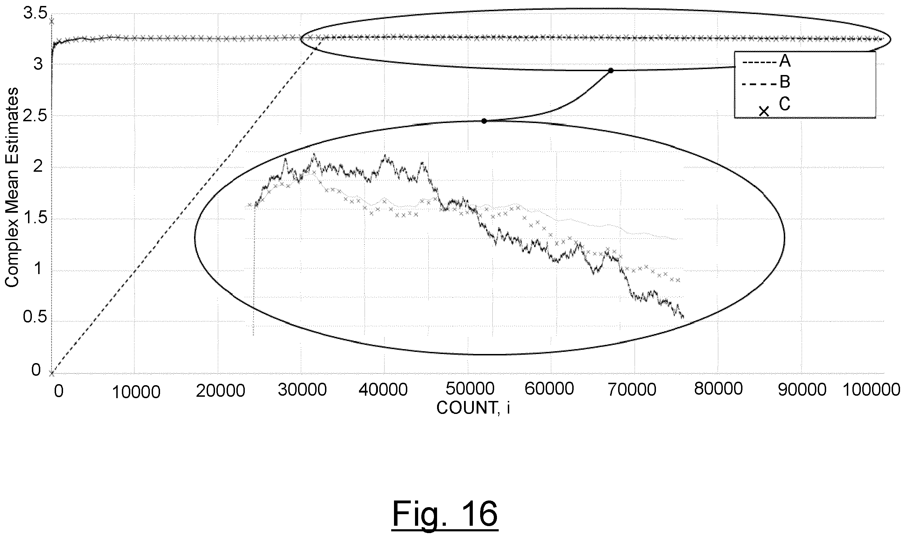

Figures 15 and 16 correspond to Figures 13 and 14 respectively, but where the counter holding condition occurs at $i$=32 768, and the window size for the windowing method is also set to 32 768. Again, the windowing method (plot "B") takes 32 768 estimates before it is able to reflect values nearer to the classical mean estimation method, whereas the method according to the present disclosure (plot "C") is in immediate agreement with the classical method (plot "A") and stays in agreement until the counter is frozen at the value of 32 768. Thereafter, both the windowing method and the method according to the present disclosure deviate from the classical mean estimate (as seen from the cut-out and expansions in Figure 15 and Figure 16). However, the method according to the present disclosure shows still closer agreement to the classical method (and therefore better performance) than the averaging window method does.

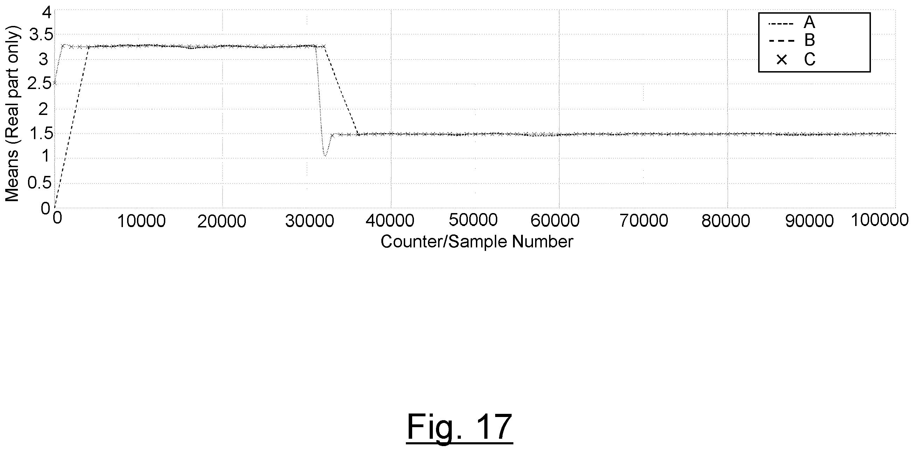

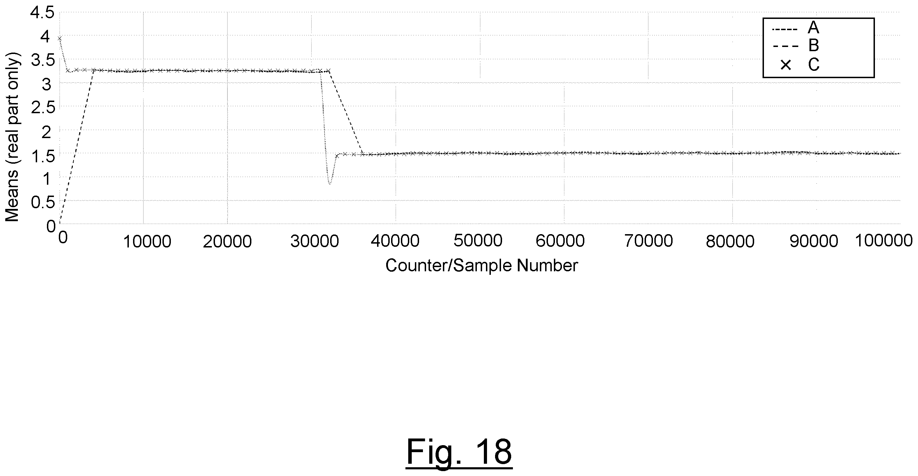

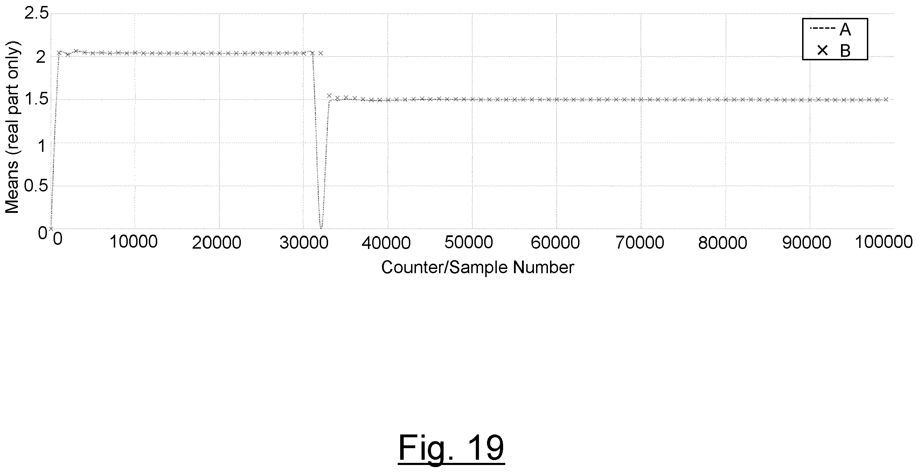

Figures 17 to 19 show the ability of methods according to the present disclosure to cope with abrupt changes in dataset statistics. The counter holding condition occurs at $i$=32 768, and the window size for the windowing method is also set to 32 768. An abrupt, step-like change in the statistics occurs at $i$=32 000. Figure 17 shows the real part of the complex mean for: a method according to the present disclosure (plot "C"); a windowing method (plot "B"); and a classical method (plot "A"). Figure 18 shows the imaginary part of the complex mean for: a method according to the present disclosure (plot "C"); a windowing method (plot "B"); and a classical method (plot "A"). Figure 19 shows the variance for: a method according to the present disclosure (plot "B"); and a classical method (plot "A"). For the real and complex means, it should be noted that the classical method exhibits overshoot and the windowing method takes several thousand counter intervals to recover from the abrupt change in sample statistics, whereas the method according to the present disclosure is able to quickly adapt to the change in statistics and continue produce a reliable estimate almost immediately after the change in statistics occurs.

Methods according to the present disclosure can be applied to determine statistics of different types of dataset. For example, the dataset could comprise samples of a communications signal and the determined mean/variance could be used in an automatic gain control (AGC) system, for example. The dataset may comprise complex numbers corresponding to in-phase, $I$, and quadrature, $Q$, components of a signal. A further application may be found in machine learning. Here, the dataset may comprise training inputs to a machine learning algorithm, and the determined mean/variance may be used to scale/normalise the training inputs. Other examples would include continuous mean-variance analysis for Modern Portfolio Theory (MPT) that weighs the risk of an investment against the potential return (statistics can be generated as each data value is generated and dynamic trends observed), Ongoing statistical surveys, where all data cannot be collected in one instance, and/or where the survey covers a long time span, real-time statistical weather forecasting, health insurance, traffic flow on motorways and roads throughout the day and over periods of days, weeks, months, etc., continuous and ongoing manufacturing processes, etc.

The methods as described above may each be comprised in or implemented in apparatus comprising a processor or processing system. The processing system may comprise one or more processors and/or memory. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A method of determining a statistical measure of a dataset, the method comprising, at a processor:

   (a) receiving an initial sample of the dataset and initialising a counter value to zero;
   (b) setting an initial value of the statistical measure based on the initial sample value;
   (c) storing, in a memory, the initial value of the statistical measure;
   (d) receiving further samples of the dataset sequentially, wherein for each successive sample received the method comprises:
   (e) incrementing the counter value;
   (f) determining an updated value of the statistical measure based on the previous, stored, value of the statistical measure, the current sample value, and the current counter value;
   (g) updating the stored value of the statistical measure in the memory with the updated value of the statistical measure; and
   (h) determining whether a reset condition is met,

   wherein in response to determining that the reset condition is met, reverting to step (a).

2. The method of claim 1, wherein when reverting to step (a), the initial sample in step (a) is the next received sample of the dataset.

3. The method of claim 1 or 2, further comprising, for each successive sample received, determining an updated value of a gradient function, wherein in response to the updated value of the gradient function exceeding a pre-determined threshold value, determining that the reset condition is met.

4. The method of claim 3, wherein the gradient function varies in response to changes in the statistics of the dataset.

5. The method of claim 3 or 4, wherein the value of the gradient function is derived by comparing successive estimates of the mean of the dataset samples.

6. The method of any one of claims 3 to 5, further comprising, for each successive sample received:

   determining an updated value of the mean of the dataset;
   comparing the updated value of the mean with the previous value of the mean; and
   determining an updated value of the gradient function based on the comparison between the updated value of the mean and the previous value of the mean.

7. The method of claim 6, wherein the step of comparing comprises:

   determining whether the updated value of the mean is greater than, the same as, or less than the previous value of the mean; and

providing an output value indicative of the whether the updated value of the mean is greater than, the same as, or less than the previous value of the mean.

8. The method of claim 7, wherein:

   the output value is positive when the updated value of the mean is greater than the previous value of the mean;
   the output value is equal to 0 when the updated value of the mean is the same as the previous value of the mean;
   the output value is negative when the updated value of the mean is less than the previous value of the mean.

9. The method of claim 7 or 8, wherein the step of determining an updated value of the gradient function comprises determining an updated mean of the output values.

10. The method of claim 9, further comprising deriving a positive value from the updated mean of the output values.

11. The method of claim 10, wherein the positive value is equal to the square of the updated mean of the output values.

12. The method of any one of claims 5 to 11, wherein:

    the dataset comprises complex values; and
    deriving the value of the gradient function comprises:

       comparing successive estimates of the mean of the dataset samples for the real and imaginary components of the samples separately; and
       combining the comparisons to obtain a single, positive value of the gradient function.

13. The method according to any preceding claim, wherein the samples are real-valued samples, the statistical measure comprises the mean and the initial value of the mean is equal to the initial sample value.

14. The method according to claim 13, wherein in step (f), determining the updated value of the mean comprises evaluating the expression:

$$\alpha_i = \left(\frac{i}{i+1}\right)\alpha_{i-1} + \frac{x_i}{i+1}$$

wherein, $\alpha_i$ is the updated value of the mean, i is the current counter value, $x_i$ is the current sample value and $\alpha_{i-1}$ is the previous value of the mean, wherein $\alpha_{-1}=0$.

15. The method according to any preceding claim, wherein the samples are complex-valued samples, the statistical measure comprises the complex mean and the initial value of the complex mean is equal to the initial complex sample value.

16. The method according to claim 15, wherein in step (f), determining the updated value of the complex mean comprises evaluating the expressions:

$$\alpha_i = \left(\frac{i}{i+1}\right)\alpha_{i-1} + \frac{x_i}{i+1},$$

$$\beta_i = \left(\frac{i}{i+1}\right)\beta_{i-1} + \frac{y_i}{i+1},$$

wherein $\mu_i = \alpha_i + j.\beta_i$ is the updated value of the complex mean, i is the current counter value, $z_i = x_i + j.y_i$ is the current sample value and $\alpha_{i-1}$ and $\beta_{i-1}$ are the real and imaginary parts of the previous value of the complex mean, wherein $\alpha_{-1}= 0$ and $\beta_{-1} = 0$.

17. The method according to claim 14, wherein the statistical measure further comprises the variance and the initial value of the variance is equal to zero, wherein in step (f), determining the updated value of the variance comprises evaluating the expression:

$$v_i = \left(\frac{i}{i+1}\right) v_{i-1} + \frac{(x_i - \alpha_i).(x_i - \alpha_{i-1})}{(i+1)}$$

wherein $v_i$ is the updated value of the variance and $v_{-1} = 0$.

18. The method according to claim 16, wherein the statistical measure further comprises the variance and the initial value of the variance is equal to zero, wherein in step (f), determining the updated value of the variance comprises evaluating the expression:

$$v_i = \left(\frac{i}{i+1}\right) v_{i-1} + \frac{(x_i - \alpha_i).(x_i - \alpha_{i-1})}{(i+1)} + \frac{(y_i - \beta_i).(y_i - \beta_{i-1})}{(i+1)}$$

wherein $v_i$ is the updated value of the variance and $v_{-1} = 0$.

19. The method according to any preceding claim, wherein the dataset comprises samples of a communications signal.

20. The method according to any preceding claim, wherein the dataset comprises complex numbers corresponding to in-phase, $I$, and quadrature, $Q$, components of a signal.

21. The method according to any one of claims 1 to 19, wherein the dataset comprises training inputs to a machine learning algorithm, the method further comprising scaling the training inputs based on the updated values of the statistical measure.

22. A computer program comprising a set of instructions, which, when executed by computerised apparatus, cause the computerised apparatus to perform a method of determining a statistical measure of a dataset, the method comprising:

(a) receiving an initial sample of the dataset and initialising a counter value to zero;
(b) setting an initial value of the statistical measure based on the initial sample value;
(c) storing, in a memory, the initial value of the statistical measure;
(d) receiving further samples of the dataset sequentially, wherein for each successive sample received the method comprises:
(e) incrementing the counter value;
(f) determining an updated value of the statistical measure based on the previous, stored, value of the statistical measure, the current sample value, and the current counter value;
(g) updating the stored value of the statistical measure in the memory with the updated value of the statistical measure; and
(h) determining whether a reset condition is met,

wherein in response to determining that the reset condition is met, reverting to step (a).

23. Apparatus for determining a statistical measure of a dataset, the apparatus comprising a processor configured to:

(a) receive an initial sample of the dataset and initialising a counter value to zero;
(b) set an initial value of the statistical measure based on the initial sample value;
(c) store, in a memory, the initial value of the statistical measure;
(d) receive further samples of the dataset sequentially, wherein for each successive sample received the method comprises:
(e) increment the counter value;
(f) determine an updated value of the statistical measure based on the previous, stored, value of the statistical measure, the current sample value, and the current counter value;
(g) update the stored value of the statistical measure in the memory with the updated value of the statistical measure; and

12

(h) determine whether reset condition is met,

wherein in response to determining that the reset condition is met, the processor is configured to revert to step (a).

100

101 – receiving an initial sample of the dataset and initialising a counter value to zero.

102 - setting an initial value of the statistical measure based on the initial sample value.

103 - storing, in a memory, the initial value of the statistical measure.

104 - receiving further samples of the dataset sequentially.

105 – incrementing the counter value.

106 – determining an updated value of the statistical measure based on the previous, stored, value of the statistical measure, the current sample value, and the current counter value.

107 - updating the stored value of the statistical measure in the memory with the updated value of the statistical measure.

108 - determining whether a counter holding condition is met.

109 - in response to determining that the counter holding condition is met, discontinuing the step of incrementing the counter value.

Fig. 1

200

**201** – receiving an initial sample of the dataset and initialising a counter value to zero.

↓

**202** - setting an initial value of the statistical measure based on the initial sample value.

↓

**203** - storing, in a memory, the initial value of the statistical measure.

↓

**204** - receiving further samples of the dataset sequentially.

↓

**205** – incrementing the counter value.

↓

**206** – determining an updated value of the statistical measure based on the previous, stored, value of the statistical measure, the current sample value, and the current counter value.

↓

**207** - updating the stored value of the statistical measure in the memory with the updated value of the statistical measure.

↓

**208** - determining whether a reset condition is met.

↓

**209** - in response to determining that the reset condition is met, reverting to step 201.

## Fig. 2

<u>Fig. 3</u>

Fig. 4

Fig. 5

Fig. 6

EP 4 336 384 A1

EP 4 336 384 A1

Fig. 7

$$e_i^p = (\sigma_i - \sigma_{i-1}) \text{ and } e_i^n = 0 \text{ when } (\sigma_i - \sigma_{i-1}) \geq 0$$
$$e_i^n = (\sigma_i - \sigma_{i-1}) \text{ and } e_i^p = 0 \text{ when } (\sigma_i - \sigma_{i-1}) < 0$$

Convergence Threshold, $d_{thresh}$

Counter

600, 400

300, 500

300, 500

Comp.

Comp.

$z_i$

$v_{i-1}$

$\sigma_{i-1}$

$v_i$

$\sigma_i$

$\mu_i$

$e_i^p$

$e_i^n$

$E_i^p$

$E_i^n$

$\sigma_i$

$v_i$

$\alpha_i \text{ or } \mu_i$

800

801

802

803

804

805

806

<u>Fig. 8</u>

EP 4 336 384 A1

Fig. 9

EP 4 336 384 A1

Fig. 10

Fig. 11

Fig. 12

Fig. 13

Fig. 14

EP 4 336 384 A1

Fig. 15

Fig. 16

EP 4 336 384 A1

Fig. 17

EP 4 336 384 A1

Fig. 18

Fig. 19

Europäisches
Patentamt

European
Patent Office

Office européen
des brevets

# EUROPEAN SEARCH REPORT

Application Number

EP 23 19 5857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YASSIN YAHYA H YHYASSIN@GMAIL COM ET AL: "Algorithm/Architecture Co-optimisation Technique for Automatic Data Reduction of Wireless Read-Out in High-Density Electrode Arrays", ACM TRANSACTIONS ON EMBEDDED COMPUTING SYSTEMS, ACM, NEW YORK, NY, US, vol. 17, no. 3, 22 May 2018 (2018-05-22), pages 1-19, XP058676999, ISSN: 1539-9087, DOI: 10.1145/3190854 * section 5.1 * | 1-23 | INV. G06F17/18 |
| X | WO 2019/240638 A1 (ERICSSON TELEFON AB L M [SE]) 19 December 2019 (2019-12-19) * paragraph [0058] – paragraph [0093]; figure 10 * | 1-23 | |
| A | ANDRE CARLON ET AL: "Multi-Iteration Stochastic Optimizers", ARXIV.ORG, CORNELL UNIVERSITY LIBRARY, 201 OLIN LIBRARY CORNELL UNIVERSITY ITHACA, NY 14853, 3 November 2020 (2020-11-03), XP081806189, * Algorithm 1, section 4 * | 1-23 | |
| A | US 2009/172064 A1 (CHEN JUEI-CHAO [TW]) 2 July 2009 (2009-07-02) * paragraphs [0001], [0016], [0018], [0035] – paragraph [0080] * | 1-23 | |

TECHNICAL FIELDS SEARCHED (IPC)

G06F

-/--

The present search report has been drawn up for all claims

| Place of search | Date of completion of the search | Examiner |
|---|---|---|
| Berlin | 15 January 2024 | Virnik, Elena |

EPO FORM 1503 03.82 (P04C01)

Europäisches Patentamt

European Patent Office

Office européen des brevets

# EUROPEAN SEARCH REPORT

Application Number

EP 23 19 5857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GLAMOCANIN OGNJEN OGNJEN GLAMOCANIN@EPFL CH ET AL: "Built-in Self-Evaluation of First-Order Power Side-Channel Leakage for FPGAs", PROCEEDINGS OF THE 33RD ANNUAL ACM SYMPOSIUM ON USER INTERFACE SOFTWARE AND TECHNOLOGY, ACMPUB27, NEW YORK, NY, USA, 23 February 2020 (2020-02-23), pages 204-210, XP058727522, DOI: 10.1145/3373087.3375318 ISBN: 978-1-4503-7514-6 * section 3 * | 1-23 | |

TECHNICAL FIELDS SEARCHED (IPC)

The present search report has been drawn up for all claims

| Place of search | Date of completion of the search | Examiner |
|---|---|---|
| Berlin | 15 January 2024 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 5857

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2024

| Patent document cited in search report | | Publication date | Patent family member(s) | | Publication date |
|---|---|---|---|---|---|
| WO 2019240638 | A1 | 19-12-2019 | NONE | | |
| US 2009172064 | A1 | 02-07-2009 | TW | 200928793 A | 01-07-2009 |
| | | | US | 2009172064 A1 | 02-07-2009 |

EPO FORM P0459

For more details about this annex : see Official Journal of the European Patent Office, No. 12/82